# EUROPEAN PATENT APPLICATION

(11) **EP 2 338 775 A1**
(43) Date of publication of application: **29.06.2011**
(21) Application number: 08877065.6
(22) Date of filing: 25.09.2008
(51) Int. Cl.: B62K 17/00, B60L 5/20, B62K 3/00

(54) **SELF-PROPELLED VEHICLE, AND DEVICE AND METHOD FOR CONTROLLING SAME**

(71) Applicant: Toyota Jidosha Kabushiki Kaisha, Toyota-shi, Aichi 471-8571 (JP)
(72) Inventor: SENBA, Yoshiyuki, Toyota-shi Aichi 471-8571 (JP); YAMADA, Koji, Toyota-shi Aichi 471-8571 (JP); IZUO, Takashi, Toyota-shi Aichi 471-8571 (JP); SERAI, Takuya, Toyota-shi Aichi 471-8571 (JP); KOIDE, Mitsuo, Aichi-gun Aichi 480-1192 (JP); SUKIGARA, Kazutoshi, Aichi-gun Aichi 480-1192 (JP); HAYASHI, Chisao, Aichi-gun Aichi 480-1192 (JP)
(74) Representative: Albutt, Anthony John
(86) International application number: PCT/JP2008/067343
(87) International publication number: WO 2010/035324

(57) **Abstract**

The vehicle is provided with a body; a pair of right and left wheels; a first motor that drives one of the wheels; a second motor that drives the other one of wheels; a controller for receiving a target current value for the first motor and controlling current of the first motor; a calculator for receiving the target current value and an actual movement amount of the first motor and calculating a disturbance torque loaded on the first motor; an adjuster for adjusting the target current value for the first motor in a basis of the disturbance torque; a controller for receiving a target current value for the second motor and controlling current of the second motor; a calculator for receiving the target current value and an actual movement amount of the second motor and calculating a disturbance torque loaded on the second motor; an adjuster for adjusting the target current value for the second motor in a basis of the disturbance torque. Accordingly, even if the disturbance torque is loaded, the vehicle can keep running as intended.

## Description

### TECHNICAL FIELD

The present invention relates to a vehicle, and in particular relates to a vehicle including a pair of right and left wheels.

### DESCRIPTION OF RELATED ART

Patent Document 1 discloses a coaxial two-wheeled vehicle comprising a pair of right and left wheels disposed coaxially. This coaxial two-wheeled vehicle comprises a body, the pair of right and left wheels disposed on the body, a motor that drives the pair of right and left wheels, a control computer that issues a motion command to the motor, and an angle detector that detects the inclination of the front-back direction of the body. The control computer is able to receive the input of the inclination of the body that was detected with the angle detector, and calculate the output torque of the motor that is required for maintaining the inclination of the body at a predetermined angle. The control computer is configured to issue a motion command to the motor based on the calculated output torque of the motor. Consequently, this coaxial two-wheeled vehicle is able to run in a standing posture in which only the pair of right and left wheels is in contact with the ground.

Patent Document 1: Japanese Patent Application Publication No. S63-305082

### DISCLOSURE OF THE INVENTION

### PROBLEM TO BE SOLVED BY THE INVENTION

The coaxial two-wheeled vehicle of Patent Document 1 calculates the output torque of the motor by substituting the inclination of the body that was detected with the angle detector into a predetermined control input calculation formula. Accordingly, if disturbance torque (torque that is loaded unexpectedly from the outside) is loaded on the coaxial two-wheeled vehicle, the output torque of the motor cannot be calculated accurately. For instance, if the coaxial two-wheeled vehicle is running on a slope, the speed will differ considerably between climbing and going down the slope. In addition, if only one of the wheels runs upon the slope, the coaxial two-wheeled vehicle will not be able to run straight, and will be thrown off balance.
The present invention has been devised in order to overcome the foregoing problems. Thus, an object of this invention is to provide technology that enables a vehicle including a pair of right and left wheels to continue running properly even when disturbance torque is loaded.

### MEANS TO SOLVE THE PROBLEM

The vehicle that is realized by the present invention includes a body, a pair of right and left wheels disposed on the body, a first motor that drives one of the pair of right and left wheels, a second motor that drives the other one of the pair of right and left wheels, a first current controller that receives a target value for current supplied to the first motor and controls the current supplied to the first motor, a first disturbance torque calculator that receives the target value inputted to the first current controller and an actual amount of movement of the first motor and calculates a disturbance torque loaded on the first motor, a first target value adjuster that adjusts the target value to be inputted to the first current controller on a basis of the disturbance torque calculated by the first disturbance torque calculator, a second current controller that receives a target value for current supplied to the second motor and controls the current supplied to the second motor, a second disturbance torque calculator that receives the target value inputted to the second current controller and an actual amount of movement of the second motor and calculates a disturbance torque loaded on the second motor, and a second target value adjuster that adjusts the target value to be inputted to the second current controller on a basis of the disturbance torque calculated by the second disturbance torque calculator.

With this vehicle, the output torque of the first motor that drives one of the wheels is decided according to the disturbance torque that is loaded on the first motor, and the output torque of the second motor that drives the other wheel is decided according to the disturbance torque that is loaded on the second motor. Consequently, even when the disturbance torque is variously loaded on the respective wheels, the respective wheels can be driven properly. For example, even if only one of the wheels runs upon a slope, the vehicle can continue to run straight by increasing the output torque of the first motor that drives the one of the wheels.

Preferably, the foregoing vehicle further includes an inclination sensor that detects an inclination of the body and a rate of change of the inclination, and a running controller that receives at least an output signal from the inclination sensor, and outputs the target values for the first and second motors by which the vehicle is configured to be able to run in a standing posture in which the vehicle grounds with only the pair of right and left wheels.
In the standing posture where only the pair of right and left wheels is in contact with the ground, the disturbance torque that is loaded on the respective wheels can be estimated more accurately. Thus, if the vehicle is able to run in the standing posture where only the pair of right and left wheels is in contact with the ground, the vehicle will be able to continue running more properly against the disturbance torque.

With the foregoing vehicle, preferably, at least one of the first disturbance torque calculator and the second disturbance torque calculator is a minimum dimension observer.
Consequently, the first disturbance torque calculator and the second disturbance torque calculator can be configured simply.

The technology of the present invention is also able to realize a controller that controls movement of a vehicle. The vehicle may comprise a body, a pair of right and left wheels disposed on the body, a first motor that drives one of the pair of right and left wheels, and a second motor that drives the other one of the pair of right and left wheels. This controller includes a first current controller that receives a target value for current supplied to the first motor, and controls the current supplied to the first motor, a first disturbance torque calculator that receives the target value inputted to the first current controller and an actual amount of movement of the first motor, and calculates a disturbance torque loaded on the first motor, a first target value adjuster that adjusts the target value to be inputted to the first current controller on a basis of the disturbance torque calculated by the first disturbance torque calculator, a second current controller that receives a target value for current supplied to the second motor, and controls the current supplied to the second motor, a second disturbance torque calculator that receives the target value inputted to the second current controller and an actual amount of movement of the second motor, and calculates a disturbance torque loaded on the second motor, and a second target value adjuster that adjusts the target value to be inputted to the second current controller on a basis of the disturbance torque calculated by the second disturbance torque calculator.
According to this controller, the vehicle can continue to run properly even if disturbance torque is loaded on the vehicle.

The technology of the present invention is also able to realize a method for controlling movement of a vehicle. The vehicle may comprise a body, a pair of right and left wheels disposed on the body, a first motor that drives one of the pair of right and left wheels, and a second motor that drives the other one of the pair of right and left wheels. This controlling method includes a first current controlling step for receiving a target value for current supplied to the first motor, and controlling the current supplied to the first motor, a first disturbance torque calculating step for receiving the target value inputted to the first current controlling step and an actual amount of movement of the first motor, and calculating a disturbance torque loaded on the first motor, a first target value adjusting step for adjusting the target value to be inputted in the first current controlling step on a basis of the disturbance torque calculated in the first disturbance torque calculating step, a second current controlling step for receiving a target value for current supplied to the second motor, and controlling the current supplied to the second motor, a second disturbance torque calculating step for receiving the target value inputted in the second current controlling step and an actual amount of movement of the second motor, and calculating a disturbance torque loaded on the second motor, and a second target value adjusting step for adjusting the target value to be inputted to the second current controlling step on a basis of the disturbance torque calculated in the second disturbance torque calculating step.
According to this controlling method, the vehicle can continue to run properly even if disturbance torque is loaded on the vehicle.

### EFFECT OF THE INVENTION

According to the present invention, for example, it is possible to realize a vehicle that is able to stably run through an unexpected rough road. The coaxial two-wheeled vehicle of this invention is able to run through a rough road which was considered impossible with the conventional coaxial two-wheeled vehicle, and the variety of activity of the vehicle can be broadened considerably.

### BRIEF DESCRIPTION OF THE DRAWINGS

Fig. 1 is a front view schematically showing a configuration of a vehicle;
Fig. 2 is a right side view schematically showing the configuration of the vehicle;
Fig. 3 shows a configuration of a control system of the vehicle;
Fig. 4 is a schematic block diagram showing a relation of input and output of a disturbance observer;
Fig. 5 shows the vehicle in its initial posture at the time of switching from a stable posture to a standing posture; and
Fig. 6 shows the vehicle in the standing posture.

### PREFERRED EMBODIMENT OF THE INVENTION

Some of the primary features of the embodiments are summarized.
(Feature 1) A vehicle hereinbelow includes trailing wheels. The trailing wheels are positioned in front of or behind a pair of right and left wheels.
(Feature 2) The vehicle includes an arm that is swingably coupled with the body and provided with a pair of right and left wheels, and an arm drive mechanism that causes the arm to swing with respect to the body. The arm drive mechanism is able to change the relative position of the body and the pair of right and left wheels by swinging the arm. The vehicle changes its posture between the standing posture where only the pair of right and left wheels are in contact with the ground and the stable posture where the trailing wheels are also in contact with the ground by changing the relative position between the body and the pair of right and left wheels.
(Feature 3) The vehicle comprises a seat that is swingably coupled with the body, and a seat drive mechanism that causes the seat to swing with respect to the body. The vehicle is able to change the center of balance of the entire vehicle including the passenger by changing the relative position of the body and the seat.

### EMBODIMENT

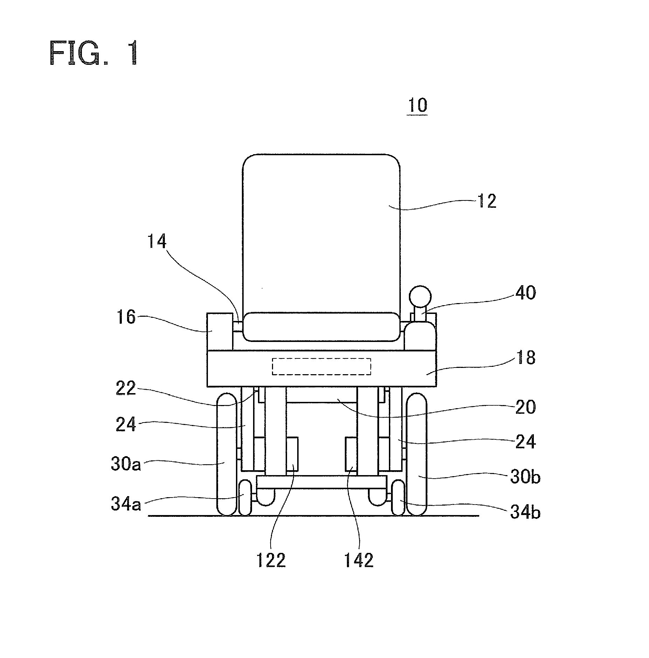

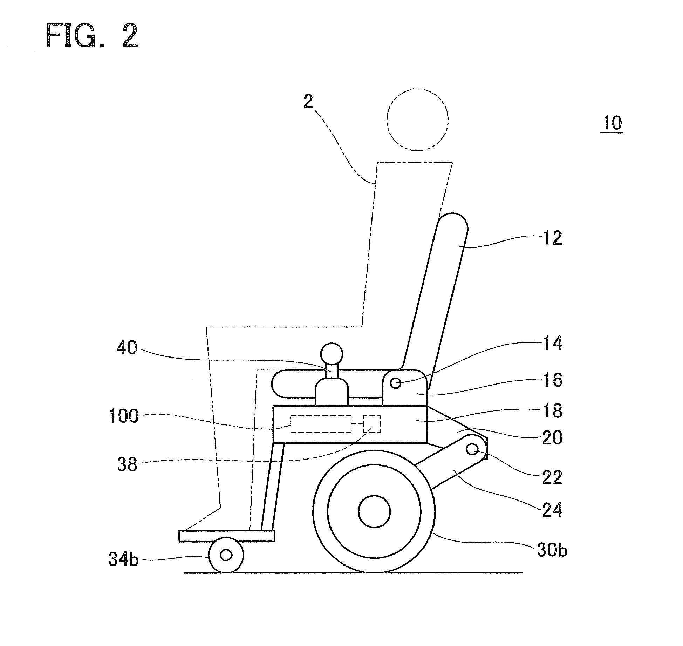

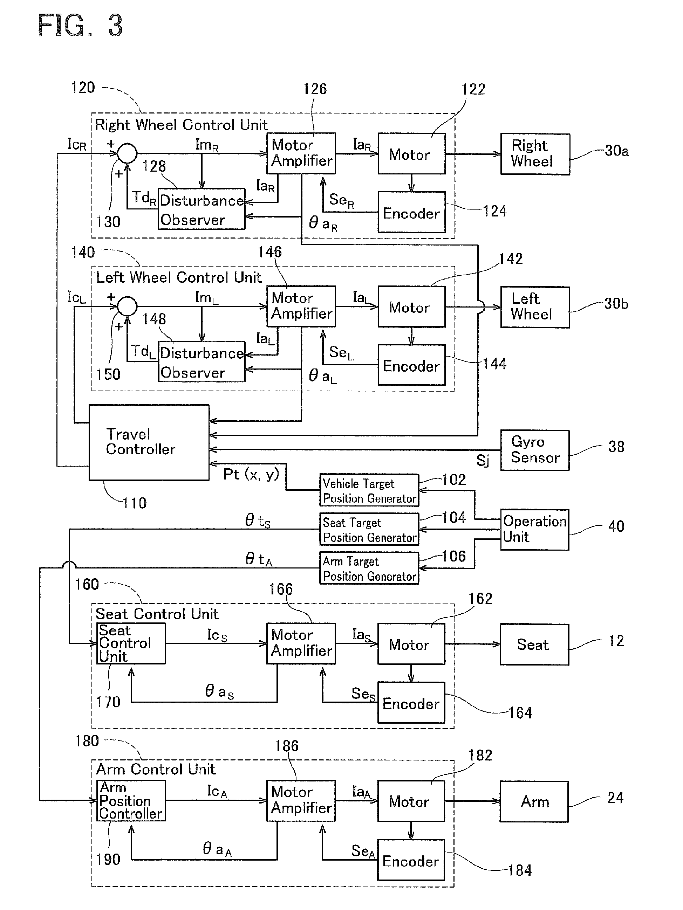

Embodiments of the present invention are now explained with reference to the attached drawings. Fig. 1 and Fig. 2 schematically show a configuration of a vehicle 10 according to an embodiment of the present invention. Fig. 1 is a front view showing the configuration of the vehicle 10, and Fig. 2 is a right side view showing the configuration of the vehicle 10. Fig. 1 shows the front of the vehicle 10, and Fig. 2 shows the left side of the vehicle 10.
As shown in Fig. 1 and Fig. 2, the vehicle 10 includes a body 18, an arm 24 that is coupled with the body 18 via a shaft 22, a right wheel 30a and a left wheel 30b that are supported by the arm 24, a right wheel motor 122 that drives the right wheel 30a, and a left wheel motor 142 that drives the left wheel 30b. The right wheel 30a and the left wheel 30b are provided at a mutually facing position, and their axles are positioned substantially collinearly. The body 18 8 is provided with an arm drive mechanism 20. The arm drive mechanism 20 includes an arm motor 182 (shown in Fig. 3), and causes the arm 24 to swing around the shaft 22. The arm drive mechanism 20 changes the relative position of the right wheel 30a/left wheel 30b and the body 18 by swinging the arm 24.

The vehicle 10 includes a right trailing wheel 34a and a left trailing wheel 34b. The right trailing wheel 34a and the left trailing wheel 34b are provided at a mutually facing position that is forward of the right wheel 30a and the left wheel 30b. The right trailing wheel 34a and the left trailing wheel 34b are caster wheels that passively change their axle (that is, the rotating direction).
Incidentally, the two trailing wheels 34a, 34b are not an essential configuration, and the configuration may be such that only one trailing wheel is provided at the approximate center in the left/right direction. As explained in detail later, although the vehicle 10 is able to conduct both a self-balanced running: a running in a standing posture in which only the wheels 30a, 30b are in contact with the ground and a stable running: a running in a stable posture in which the trailing wheels are also in contact with the ground, if the vehicle is not required to run in the stable posture, the provision of the trailing wheels is not essential.

The vehicle 10 includes a seat 12 for loading a passenger 2. The seat 12 is coupled with the body 18 via a shaft 14, and is provided swingably to the body 18. The body 18 is provided with a seat drive mechanism 16. The seat drive mechanism 16 includes a seat motor 162 (shown in Fig. 3), and causes the seat 12 to swing around the shaft 14. The seat drive mechanism 16 changes the relative position of the seat 12 and the body 18 by swinging the seat 12.

The vehicle 10 includes an operation unit 40 to be operated by the passenger 2, a controller 100 that controls the movement of the vehicle 10 based on the operation input into the operation unit 40, and a gyro sensor 38 that measures the rate of change (inclination angular velocity) of the inclination in the front-back direction of the body 18. The operation unit 40 and the controller 100 and the gyro sensor 38 are provided to the body 18.
The operation unit 40 includes a control stick, a switch and the like. The passenger 2 is able to control the speed and direction of the vehicle 10 and switch between the self-balanced running and the stable running by operating the control stick and the switch. The controller 100 is configured from a computer device and various types of control software.

Fig. 3 shows an electrical configuration of the vehicle 10. A part of the configuration shown in Fig. 3 is composed by the hardware and software of the controller 100. As shown in Fig. 3, the vehicle 10 includes a right wheel control unit 120 that controls the movement of the right wheel 30a, a left wheel control unit 140 that controls the movement of the left wheel 30b, a seat control unit 160 that controls the movement of the seat 12, and an arm control unit 180 that controls the movement of the arm 24.
In addition, the vehicle 10 includes a vehicle target position generator 102 that generates a target position Pt (x, y) of the vehicle 10, a seat target position generator 104 that generates a target position (angle) θtₛ of the seat 12, and an arm target position generator 106 that generates a target position (angle) θt_{A} of the arm 24. The vehicle target position generator 102 and the seat target position generator 104 and the arm target position generator 106 respectively generate the target positions Pt (x, y), θtₛ, θt_{A} based on the operation input into the operation unit 40.

The vehicle 10 additionally includes a travel controller 110. The travel controller 110 receives an input of an actual rotating angle θa_{R} of the right wheel motor 122 from the right wheel control unit 120, an input of an actual rotating angle θa_{L} of the left wheel motor 142 from the left wheel control unit 140, an input of an output signal Sj of the gyro sensor 38, and an input of a target position Pt (x, y) of the vehicle 10 from the vehicle target position generator 102. The travel controller 110 calculates a target value Ic_{R} of the motor current supplied to the right wheel motor 122 and a target value Ic_{L} of the motor current supplied to the left wheel motor 142 based on the foregoing input values θa_{R}, θa_{L}, Sj, Pt (x, y). The travel controller 110 outputs the calculated target values Ic_{R} and Ic_{R} to the right wheel control unit 120 and the left wheel control unit 140, respectively. Incidentally, the travel controller 110 calculates the inclination of the front-baclc direction of the body 18 and the rate of change of the inclination based on the output signal Sj of the output signal Sj of the gyro sensor 38 upon calculating the target values Ic_{R}, Ic_{L} of the motor current.

As mentioned above, the vehicle 10 is able to conduct the self-balanced running, which is to run in the standing posture where only the left and right wheels 30a, 30b are in contact with the ground, and the stable running, which is to run in the stable posture where the trailing wheels 34a, 34b are also in contact with the ground. If the self-balanced running is commanded from the operation unit 40, the travel controller 110 calculates the foregoing target values Ic_{R}, Ic_{L} of the motor current so that the vehicle 10 can continue to run without falling based on the target position Pt (x, y) of the vehicle 10 that was input from the vehicle target position generator 102 and the output signal Sj of the gyro sensor 38. Consequently, the center of balance of the vehicle 10 (including the passenger 2) is controlled with consideration given to the inertia force with respect to the grounding point of the right wheel 30a and the left wheel 30b. Specifically, the center of balance of the vehicle 10 (including the passenger 2) with consideration given to the inertia force will consequently be controlled to be positioned approximately vertically upward with respect to the straight line connecting the grounding points of the right wheel 30a and the left wheel 30b. Accordingly, the vehicle 10 runs in a forward tilt when accelerating forward (or decelerating backward), and runs in a backward tilt when decelerating forward (or accelerating backward). Meanwhile, if the stable running is commanded from the operation unit 40, the travel controller 110 primarily calculates the foregoing target values Ic_{R}, Ic_{L} of the motor current based on the target position Pt (x, y) of the vehicle 10 that was input from the vehicle target position generator 102. In the foregoing case, there is no need to give consideration to the relative position of the center of balance of the vehicle 10 (including the passenger 2) with respect to the grounding points of the right wheel 30a and the left wheel 30b, where the center of balance having given consideration to the inertia force.

The right wheel control unit 120 includes a right wheel motor 122 that drives the right wheel 30a, a right wheel encoder 124 that detects an actual rotating angle θa_{R} of the right wheel motor 122, and a right wheel motor amplifier 126 that controls the motor current Ia_{R} to be supplied to the right wheel motor 122. The right wheel motor amplifier 126 receives an input of an output signal Se_{R} of the right wheel encoder 124 and calculates the actual rotating angle θa_{R} of the right wheel motor 122. The calculated actual rotating angle θa_{R} of the right wheel motor 122 is input into the travel controller 110 and the right wheel disturbance observer 128 described later.
Moreover, the right wheel control unit 120 includes a right wheel disturbance observer 128 that estimates a disturbance torque Td_{R} that is loaded on the right wheel motor 122, and a right wheel target value adjuster 130 that adjusts the target value Ic_{R} of the motor current that was input from the travel controller 110 based on the disturbance torque Td_{R} that was estimated by the right wheel disturbance observer 128. The adjusted target value Im_{R} after it has been adjusted by the right wheel target value adjuster 130 is input into the right wheel motor amplifier 126. The right wheel motor amplifier 126 controls the motor current Ia_{R} to be supplied to the right wheel motor 122 to the input adjusted target value Im_{R}. Consequently, the motor current is supplied to the right wheel motor 122 so as to compensate for the disturbance torque Td_{R} that is loaded on the right wheel motor 122.
The term "disturbance torque" as used herein refers to the torque that is unexpectedly loaded. For example, disturbance torque is loaded on the right wheel motor 122 when there is an unexpected slope or bump on the road surface on which the vehicle 10 is traveling, or when the vehicle 10 is subject to an unexpected accident (flat tire, for example).

As shown in Fig. 3, the left wheel control unit 140 has a similar configuration as the right wheel control unit 120. Specifically, the left wheel control unit 140 includes a left wheel motor 142 that drives the left wheel 30b, a left wheel encoder 144 that detects an actual rotating angle θa_{L} of the left wheel motor 142, and a left wheel motor amplifier 146 that controls a motor current Ia_{L} to be supplied to the left wheel motor 142. The left wheel motor amplifier 146 receives an input of an output signal Se_{L} of the left wheel encoder 144, and calculates an actual rotating angle θa_{L} of the left wheel motor 142. The calculated actual rotating angle θa_{L} of the left wheel motor 142 is input into the travel controller 110 and the left wheel disturbance observer 148 described later.
Moreover, the left wheel control unit 140 includes a left wheel disturbance observer 148 that estimates a disturbance torque Td_{L} that is loaded on the left wheel motor 142, and a left wheel target value adjuster 150 that adjusts a target value Ic_{L} of the motor current that was input from the travel controller 110 based on the disturbance torque Td_{L} that was estimated with the left wheel disturbance observer 148. The adjusted target value Im_{L} after it has been adjusted by the left wheel target value adjuster 150 is input into the left wheel motor amplifier 146. The left wheel motor amplifier 146 controls the motor current Ia_{L} to be supplied to the left wheel motor 142 to the input adjusted target value Im_{L}. Consequently, the motor current is supplied to the left wheel motor 142 so as to compensate for the disturbance torque Td_{L} that is loaded on the left wheel motor 142.

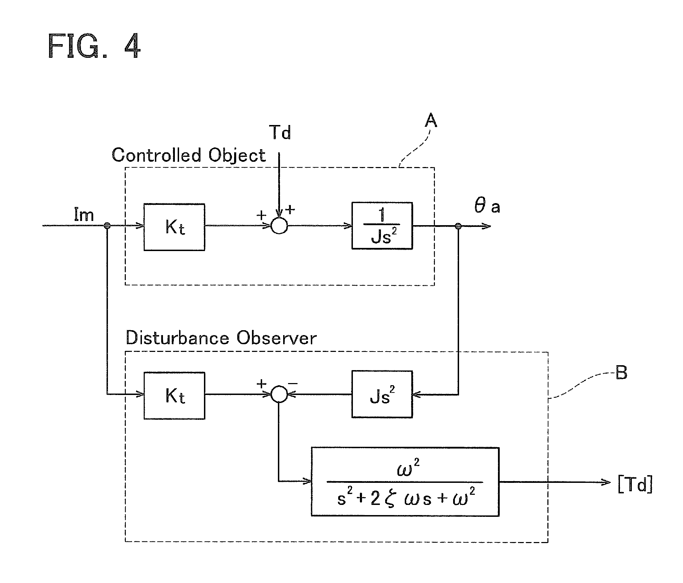

The right wheel disturbance observer 128 and the left wheel disturbance observer 148 are now explained with reference to Fig. 4. The right wheel disturbance observer 128 and the left wheel disturbance observer 148 have the same configuration, and such configuration is represented with the schematic block diagram shown in Fig. 4. The range of A in Fig. 4 shows the system of the motors 122, 142 to be controlled, and the range of B in Fig. 4 shows the configuration of the disturbance observers 128, 148.
The disturbance observers 128, 148 receive the input of the adjusted target value Im of the motor current that was actually input into the motor amplifiers 126, 146 and the input of the actual rotating angle θa of the motors 122, 142, and output an estimated value [Td] of the disturbance torque Td that is loaded on the respective motors 122, 142. Incidentally, the suffixes R, L are omitted in Fig. 4, and the adjusted target value Im_{R} or Im_{L} is simply indicated as Im, the actual rotating angle θa_{R} or θa_{L} is simply indicated as θa, the disturbance torque Td_{R} or Td_{L} is simply indicated as Td, and the estimated value [Td_{R}] or [Td_{L}] of the disturbance torque is simply indicated as [Td]. In Fig. 4, Kt represents the torque constant, J represents the inertia of the motors 122, 142, s represents the Laplace operator, and ω²/(S² + 2ζωs + ω²) represents the low-pass filter. As shown in Fig. 4, the disturbance observers 128, 148 are so-called minimum dimension observers. Incidentally, the disturbance observers 128, 148 may also be configured as identity dimension (full dimension) observers. The configuration of the disturbance observers 128, 148 can be designed based on a well-known configuration method.
As shown in Fig. 4, the disturbance observers 128, 148 calculate the output torque of the motors 122, 142 based on the adjusted target value Im of the motor current that was input into the motor amplifiers 126, 146 respectively, and calculate the output torque of the motors 122, 142 based on the actual rotating angle θa of the motors 122, 142 respectively, and estimate the disturbance torque Td that is loaded on the motors 122, 142 respectively based on the deviation between the two.

As shown in Fig. 3, the seat control unit 160 includes a seat motor 162 that causes the seat 12 to swing, a seat encoder 164 that detects an actual rotating angle θa_{S} of the seat motor 162, a seat motor amplifier 166 that controls the motor current Ia_{S} to be supplied to the seat motor 162, and a seat position controller 170. The seat motor amplifier 166 receives an input of an output signal Se_{S} of the seat encoder 164, and calculates the actual rotating angle θa_{S} of the seat motor 162. The calculated actual rotating angle θa_{S} of the seat motor 162 is input into the seat position controller 170. The seat position controller 170 receives an input of a target position (angle) θt_{S} of the seat 12 from the seat target position generator 104 and receives an input of the actual rotating angle θa_{S} of the seat motor 162 from the seat motor amplifier 166, and calculates a target value Ic_{S} of the motor current to be supplied to the seat motor 162 based on the foregoing input values θt_{S}, θa_{S}. The target value Ic_{S} that was calculated by the seat position controller 170 is input into the seat motor amplifier 166. The seat motor amplifier 166 controls the motor current Ia_{S} to be supplied to the seat motor 162 to the input target value Ic_{S}. Consequently, the motor current is supplied to the seat motor 162 so that the actual position (angle) of the seat 12 will become the target position (angle) θt_{S}.

The arm control unit 180 includes an arm motor 182 that causes the arm 24 to swing, an arm encoder 184 that detects an actual rotating angle θa_{A} of the arm motor 182, an arm motor amplifier 186 that controls a motor current Ia_{A} to the supplied to the arm motor 182, and an arm position controller 190. The arm motor amplifier 186 receives an input of an output signal Se_{A} of the arm encoder 184, and calculates the actual rotating angle θa_{A} of the arm motor 182. The calculated actual rotating angle θa_{A} of the arm motor 182 is input into the arm position controller 190. The arm position controller 190 receives an input of a target position (angle) θt_{A} of the arm 24 from the arm target position generator 106 and in input of an actual rotating angle θa_{A} of the arm motor 182 from the arm motor amplifier 186, and calculates a target value Ic_{A} of the motor current to be supplied to the arm motor 182 based on the foregoing input values θt_{A}, θa_{A}. The target value Ic_{A} that was calculated with the arm position controller 190 is input into the arm motor amplifier 186. The arm motor amplifier 186 controls the motor current Ia_{A} to be supplied to the arm motor 182 to the input target value Ic_{A}. Consequently, the motor current is supplied to the arm motor 182 so that the actual position (angle) of the arm 24 will be the target position (angle) θt_{A}.

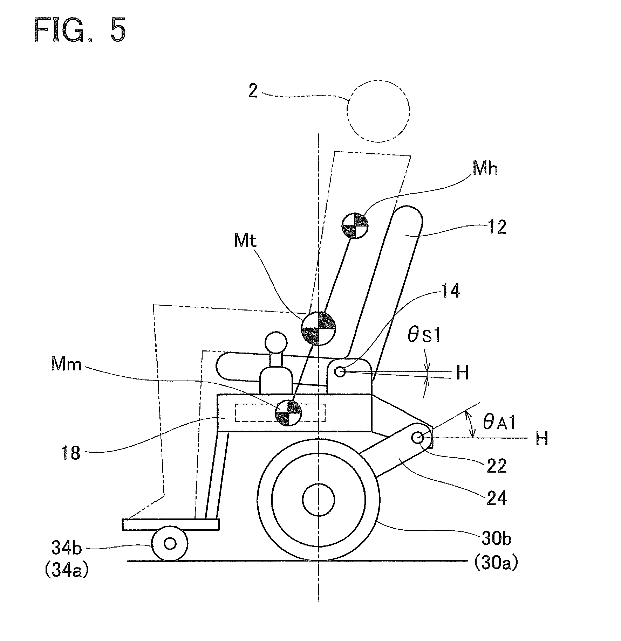

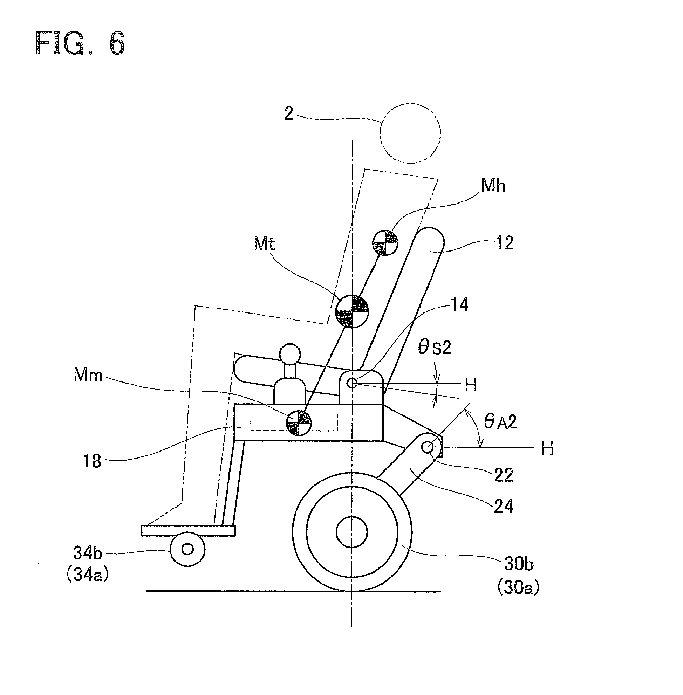

According to the foregoing configuration, the vehicle 10 is able to move forward, backward and change directions according to the intention of the passenger 2 by controlling the amount of rotation of the respective left and right wheels 30a, 30b by following the operation that the passenger 2 has input using the operation unit 40. Moreover, the vehicle 10 is able to conduct both the self-balanced running, which is to run in the standing posture where only the left and right wheels 30a, 30b are in contact with the ground, and the stable running, which is to run in the stable posture where the trailing wheels 34a, 34b are also in contact with the ground.
The operation of switching from the stable posture to the standing posture of the vehicle 10 is now explained with reference to Fig. 5 and Fig. 6. Under normal circumstances, the passenger 2 gets on and gets off from the vehicle 10 in the stable posture. After getting on the vehicle 10, if the passenger 2 uses the operation unit 40 to issue a switch command for switching to the standing posture, the vehicle 10 changes to the initial posture shown in Fig. 5. The initial posture shown in Fig. 5 is a posture where the center of gravity Mt which is the synthetic point of the gravity Mh of the passenger 2 and the gravity Mm of the vehicle 10 is positioned approximately vertically upward with respect to the straight line connecting the grounding points of the left and right wheels 30a, 30b. The rotating angle θ_{S}1 centered around the shaft 14 of the seat 12 and the rotating angle θ_{A}1 centered around the shaft 22 of the arm 24 in the foregoing case are respectively decided by the seat target position generator 104 and the arm target position generator 106. Here, the straight line H in Fig. 5 shows the horizontal plane. The weight and the like of the passenger 2 are instructed to the seat target position generator 104 and the arm target position generator 106 in advance.

Subsequently, the vehicle 10 synchronizes and swings the seat 12 and the arm 24 while maintaining the center of gravity Mt to be vertically upward with respect to the straight line connecting the grounding points of the left and right wheels 30a, 30b. Thereby, the vehicle 10 changes to the standing posture shown in Fig. 6. The standing posture shown in Fig. 6 is a posture where center of gravity Mt is positioned approximately upward in the vertical direction of the straight line connecting the grounding points of the left and right wheels 30a, 30b, and the left and right trailing wheels 34a, 34b are floating in the air. The rotating angle θ_{S} of the seat 12 and the rotating angle θ_{A} of the arm 24 during the transition period from the stable posture shown in Fig. 5 to the standing posture shown in Fig. 6 are also decided by the seat target position generator 104 and the arm target position generator 106, respectively. The control method of the travel controller 110 is switching to the self-balanced running control during the transition period from the stable posture to the standing posture. Thereby, the vehicle 10 moves forward or backward as required in order to prevent the vehicle 10 from falling during the transition period from the stable posture to the standing posture.

While the vehicle 10 is running, various types of disturbance torques are loaded on the left and right wheels 30a, 30b, respectively. Here, the vehicle 10 is able to use the respective wheels 30a, 30b to independently compensate for the disturbance torque that is loaded on the respective wheels 30a, 30b. For example, if only the right wheel 30a runs upon a slope or a bump, only the right wheel 30a can be driven with a greater torque. Or if the right wheel 30a goes flat, only the right wheel 30a can be driven with a greater torque. Consequently, the vehicle 10 is able to continue running without suddenly losing balance or falling. In particular, when the vehicle 10 is conducting the self-balanced running, it is able to run on a rough road smoothly without falling, which was considered difficult with conventional technology.

Specific embodiments of the present teachings are described above, but those merely illustrate some representative possibilities for utilizing the teachings and do not restrict the claims thereof. The subject matter set forth in the claims includes variations and modifications of the specific examples set forth above.
For example, the present embodiment uses a gyro sensor for measuring the inclination of the front-back direction of the body and the rate of change of the inclination. Nevertheless, if either one of the inclination of the front-back direction of the body or the rate of change of the inclination can be detected with a sensor, the value of the other thereof can be calculated based on subjecting the output signal of the sensor to temporal differentiation or temporal integration. Accordingly, with the vehicle of the present embodiment, an angle sensor that detects the inclination of the front-back direction of the body can be used in substitute for the gyro sensor. In the foregoing case also, the controller is able to calculate the inclination of the front-back direction of the body and the rate of change of the inclination based on the output signal of the angle sensor.

The technical elements disclosed in the specification or the drawings may be utilized separately or in all types of combinations, and are not limited to the combinations set forth in the claims at the time of filing of the application. Furthermore, the subject matter disclosed herein may be utilized to simultaneously achieve a plurality of objects or to only achieve one object.

## Claims

1. A vehicle, comprising:
a body;
a pair of right and left wheels disposed on the body;
a first motor that drives one of the pair of right and left wheels;
a second motor that drives the other one of the pair of right and left wheels;
a first current controller that receives a target value for current supplied to the first motor, and controls the current supplied to the first motor;
a first disturbance torque calculator that receives the target value inputted to the first current controller and an actual amount of movement of the first motor, and calculates a disturbance torque loaded on the first motor;
a first target value adjuster that adjusts the target value to be inputted to the first current controller on a basis of the disturbance torque calculated by the first disturbance torque calculator;
a second current controller that receives a target value for current supplied to the second motor, and controls the current supplied to the second motor;
a second disturbance torque calculator that receives the target value inputted to the second current controller and an actual amount of movement of the second motor, and calculates a disturbance torque loaded on the second motor; and
a second target value adjuster that adjusts the target value to be inputted to the second current controller on a basis of the disturbance torque calculated by the second disturbance torque calculator.

2. The vehicle as in claim 1, further comprising:
an inclination sensor that detects at least one of an inclination of the body and a rate of change of the inclination; and
a running controller that receives at least an output signal from the inclination sensor, and outputs the target values for the first and second motors by which the vehicle is configured to be able to run in a standing posture in which the vehicle grounds with only the pair of right and left wheels.

3. The vehicle as in claim 1, wherein at least one of the first disturbance torque calculator and the second disturbance torque calculator is a minimum dimension observer.

4. A controller that controls movement of a vehicle, wherein the vehicle comprises a body, a pair of right and left wheels disposed on the body, a first motor that drives one of the pair of right and left wheels, and a second motor that drives the other one of the pair of right and left wheels, the controller comprising
a first current controller that receives a target value for current supplied to the first motor, and controls the current supplied to the first motor;
a first disturbance torque calculator that receives the target value inputted to the first current controller and an actual amount of movement of the first motor, and calculates a disturbance torque loaded on the first motor;
a first target value adjuster that adjusts the target value to be inputted to the first current controller on a basis of the disturbance torque calculated by the first disturbance torque calculator;
a second current controller that receives a target value for current supplied to the second motor, and controls the current supplied to the second motor;
a second disturbance torque calculator that receives the target value inputted to the second current controller and an actual amount of movement of the second motor, and calculates a disturbance torque loaded on the second motor; and
a second target value adjuster that adjusts the target value to be inputted to the second current controller on a basis of the disturbance torque calculated by the second disturbance torque calculator.

5. A method for controlling movement of a vehicle, wherein the vehicle comprises a body, a pair of right and left wheels disposed on the body, a first motor that drives one of the pair of wheels, and a second motor that drives the other one of the pair of right and left wheels, the method comprising
a first current controlling step for receiving a target value for current supplied to the first motor, and controlling the current supplied to the first motor;
a first disturbance torque calculating step for receiving the target value inputted to the first current controlling step and an actual amount of movement of the first motor, and calculating a disturbance torque loaded on the first motor;
a first target value adjusting step for adjusting the target value to be inputted in the first current controlling step on a basis of the disturbance torque calculated in the first disturbance torque calculating step;
a second current controlling step for receiving a target value for current supplied to the second motor, and controlling the current supplied to the second motor;
a second disturbance torque calculating step for receiving the target value inputted in the second current controlling step and an actual amount of movement of the second motor, and calculating a disturbance torque loaded on the second motor; and
a second target value adjusting step for adjusting the target value to be inputted to the second current controlling step on a basis of the disturbance torque calculated in the second disturbance torque calculating step.
